# DEMANDE DE BREVET EUROPEEN

(11) **EP 1 657 148 A1**
(43) Date de publication de la demande: **17.05.2006**
(21) Numéro de dépôt: 04766906.4
(22) Date de dépôt: 06.08.2004
(51) Int. Cl.: B62J 1/08, B62K 19/36

(54) **TIGE POUR SELLE DE BICYCLETTE**

(30) Priorité: 07.08.2003 ES 200301897 U
(71) Demandeur: Coronado Costa, Dionisio, 20006 San Sebastian (Guipuzcoa) (ES)
(72) Inventeur: Coronado Costa, Dionisio, 20006 San Sebastian (Guipuzcoa) (ES)
(86) Numéro de dépôt international: PCT/ES2004/000367
(87) Numéro de publication internationale: WO 2005/014380

(57) **Abrégé**

On décrit une tige de selle de vélo utilisée pour fixer la selle du vélo à la structure du même. La tige présente des caractéristiques constructives et d'usage clairement différentes par rapport aux tiges conventionnelles étant construite en une seule pièce de matériel léger et résistant qui permet à l'usager de régler facilement et rapidement la position de la selle avec des coins en matériel élastique (gomme dure ou matériel pareil). La tige inventée comprend une section tubulaire inférieure et une section supérieure en forme de tronc de pyramide inversée, avec une conduite longitudinale externe sur chaque côté où on situe les barres d'appui de la selle et, en plus, simplifie le blocage de la selle en utilisant une bride devant et une bride arrière dessinées à cet effet.

## Description

### Objet de l'Invention

Cette invention fait référence à une nouvelle tige de selle qui se caractérise pour ses notables avantages par rapport aux moyen connus et utilisés avec le même fin dans l'état actuel de cette technique.

En particulier, cette invention propose le développement d'une tige qui s'utilise pour unir la selle du vélo à la structure du même de façon que la tige se fixe à une section du tube vertical incliné qui émerge du cadre du vélo. La tige présente des caractéristiques constructives et d'usage clairement différentes par rapport aux tiges conventionnelles étant construite en une seule pièce de matériel léger et résistant qui permet à l'usager de régler facilement et rapidement la position de la selle selon l'angle du cadre ou avec des coins en matériel élastique (gomme dure ou matériel pareil), dessinés à cet effet. La tige objet de l'invention a aussi l'avantage additionnelle de faciliter l'union de la selle en utilisant deux brides simples.

Le domaine d'utilisation de cette invention est le secteur industriel qui s'occupe de la fabrication de vélos, de sport ou de promenade, et en particulier de mécanismes de disposition et assujettissement de la selle à la structure.

### Précédentes et Sommaire de l'Invention

Il est bien connu par tout le monde que n'importe quel vélo, de sport ou de promenade, comprend dans la partie supérieure une selle sur laquelle s'assoit l'usager du vélo unie à la structure du vélo et généralement susceptible d'adaptation à la position la plus confortable pour le cycliste. La disposition et assujettissement de la selle à la structure se réalise à travers une pièce intermédiaire qu'on appelle « tige », c'est-à-dire une pièce qui s'adapte au tube vertical incliné qui émerge de la caisse des pédales dans l'intersection du tube horizontal avec tirants supérieures jusqu'au côté du cadre du vélo et qui généralement est constituée par deux ou plusieurs parties qui s'accouplent au tube vertical incliné comme des colliers fixés avec des pièces mobiles qui se règlent selon l'angle du cadre qui déterminera la position de la selle.

Très souvent, ce type de tiges présente des inconvénients qui dérivent des éléments utilisés dans le fixage pour créer l'angle adéquat et des caractéristiques et conditions inhérents à son usage. Pour cette raison, il est souhaitable disposer d'une tige facile d'installer et d'assembler qui puisse offrir des garanties de sécurité suffisantes quand on utilise le vélo.

Avec la tige qu'on décrit ci-dessous on a joint pleinement ces objectifs et le point 1 de revendications contient les caractéristiques principaux de cet objet.

En résumé, la tige inventée a été conçue a partir d'une seule pièce fabriquée avec un matériel léger (par exemple: titane, aluminium ou pareil) susceptible d'assujettissement au cadre dans le tube vertical et horizontal - ou former une seule pièce dans le dernier tronçon du même tube vertical incliné comme prolongation du même - déjà fabriquée avec l'inclination déterminée selon les besoins physiques d'un cycliste déterminé et avec des conduites où on règle les coins qui permettent de modifier cette inclination selon les goûts et les besoins de chacun. La tige objet de l'invention est facile, rapide et commode de fixer puisqu'il s'agit d'une seule pièce et donc extrêmement sûre, sans aucun vis ou d'autres éléments mobiles qui pourraient se désajuster à l'usage du vélo et causer des mouvements indésirables de la selle.

Conformément à l'invention, la tige proposée présente un trou axial pour le couplage avant mentionné au tube vertical incliné du cadre et dans la partie supérieure ou base l'inclination adéquate selon l'angle du cadre favorable au positionnement final de la selle du vélo et elle présente aussi deux conduites, une pour chaque côté de cette base, pour la réception et établissement des barres d'appui de la selle. Pour fixer la selle, après avoir assemblé les barres d'appuis dans les conduites latérales de la tige, on utilise une bride de positionnement devant et une de positionnement arrière et deux vis pour chaque bride ; dans ce but, la tige a été conçue avec quatre trous intérieurement en forme de pas de vis dans la partie intérieure de chaque coin par rapport au trou axial cité avant. Le numéro des trous est variable selon le blocage de la selle à la tige avec un croisillon ou n'importe quel élément variable.

La tige est construite en une seule pièce, sans aucune pièce mobile pour se modifier selon l'angle di cadre puisque dans la base de la tige même possède l'angle nécessaire pour chaque cadre qui, le cas échéant, peut être modifié avec les coins qui se posent dans ses conduites latérales.

### Brève Description des Dessins

Ces caractéristiques et avantages de l'invention se mettent en évidence clairement avec la description détaillée suivante qui suggère la forme préférée de réalisation, même si uniquement à titre illustratif et non limitatif, qui fait référence aux dessins adjoints :
La Figure 1 montre une vue perspective de la section supérieure d'une tige conforme à l'invention;
La Figure 2 est une section de la tige de la Figure 1 selon un plan longitudinal qui suit une direction diamétrale;
La Figure 3 montre une vue projetée en élévation latérale de la partie supérieure de la tige conforme à l'invention;
Les Figures 3a et 3c montrent des sections transversales respectives pratiquées par les plans I-I, II-II et III-III de la Figure 3;
La Figure 4a et 4b représentent des vues de la section longitudinale et vue en plan supérieur d'une pièce de bride avant ;
La Figure 5a et 5b représentent des vues équivalentes de la section longitudinale et plan supérieur d'une pièce de bride arrière;

### Description d'une Forme de Réalisation Préférée

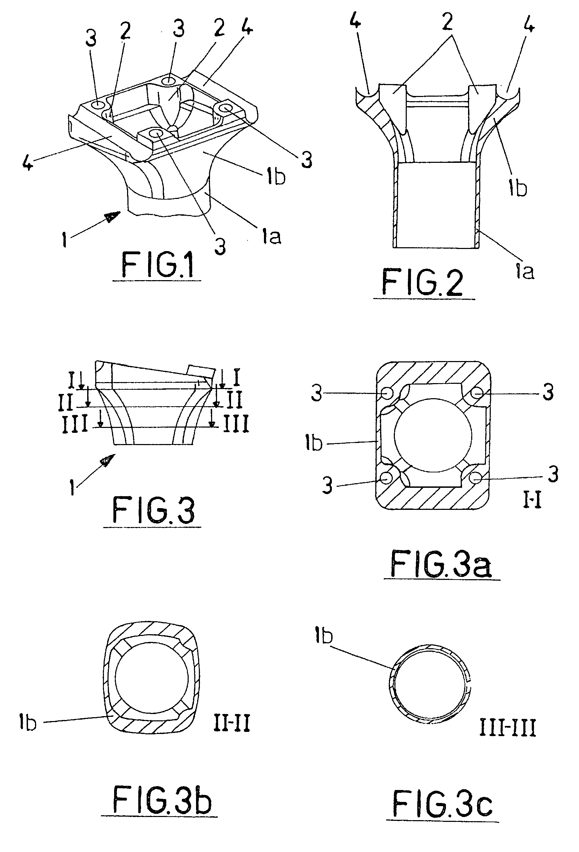

Conformément aux dispositions précédentes, la description détaillée de la forme de réalisation préférée du dispositif de l'invention se réalise avec l'aide des dessins adjoints et on utilisera les mêmes références numériques pour indiquer les parties égales ou semblables. Donc, en premier lieu, en vertu des Figures 1 et 2 des dessins, on peut voir la représentation de la section supérieure ou base d'une pièce de la tige identifiée en général avec la référence 1, construite en une seule pièce qui possède l'angle nécessaire et qui comprend une pièce inférieure généralement de forme cylindrique ou tube et une pièce supérieure, 1b qui augmente progressivement ses dimensions en direction ascendante jusqu'à adopter une configuration qui généralement paraît un tronc de pyramide avec une section rectangulaire avec des surfaces incurvées avec concavité vers l'extérieur. Les côtés latéraux de la section supérieure ou tête de la tige son plus épaisses, tandis que les côtés avant et arrière du tube ont aussi un épaisseur majeur puisque les deux doivent soutenir un effort majeur. L'épaisseur du tube augmente en direction ascendante sans modifier la forme cylindrique extérieure (ce qu'on connaît comment *ellipse conique intérieure d'un tube).* Dans la pièce de tige 1 existe un trou axial dont les dimensions augmentent par rapport à la portion 1b supérieure de la tige permettant la formation interne de piliers 2 intégrales avec la pièce proches à chaque coin et chaque pilier est pourvu d'un trou 3 en forme de pas de vis intérieurement. En plus, la pièce de tige présente une conduite extérieure à chaque côté, chacune indiquée avec la référence numéro 4 et qui se développent de manière parallèle entre elles et avec le plan qui contient le cadre du vélo. L'hauteur auquel se trouvent ces conduites latéraux, 4, permet au bord externe d'être au même niveau du plan de la base supérieure de la tige.

La configuration concernant la Figure 1 se reflet clairement dans la Figure 2 où on représente une section transversale pratiquée sur la tige selon la direction du plan longitudinal central. Dans cette Figure 2, on voit clairement la différence des configurations adoptées respectivement par les sections 1a inférieure et 1b supérieure. Cette forme de réalisation permet l'assemblage de la tige à la structure du vélo avec l'aide de la section inférieure. A cet effet, la surface interne de cette partie inférieure peut être enroulée ou utilisée comme portion d'emboutissage ou, encore, former une seule pièce avec le tube vertical incliné. De cette façon, les parties les plus épaisses internes de la portion 1 b supérieure arrêtent le mouvement d'introduction de la partie du tube vertical incliné qui émerge du cadre du vélo à l'intérieure de la portion 1a.

En observant la Figure 3 on voit que le plan de la base supérieure de la tige est légèrement incliné permettant le positionnement adéquat de la selle quand on s'assemble à la tige. Les sections transversales I-I à III-III représentées respectivement dans les Figures 3a et 3c ont été réalisées aux niveaux indiqués avec les mêmes références dans la Figure 3 et le but principal est montrer de façon claire et indubitable comment la configuration de la pièce change jusqu'à adopter une forme complètement circulaire unie inférieurement avec le bloc indiqué comme 1a.

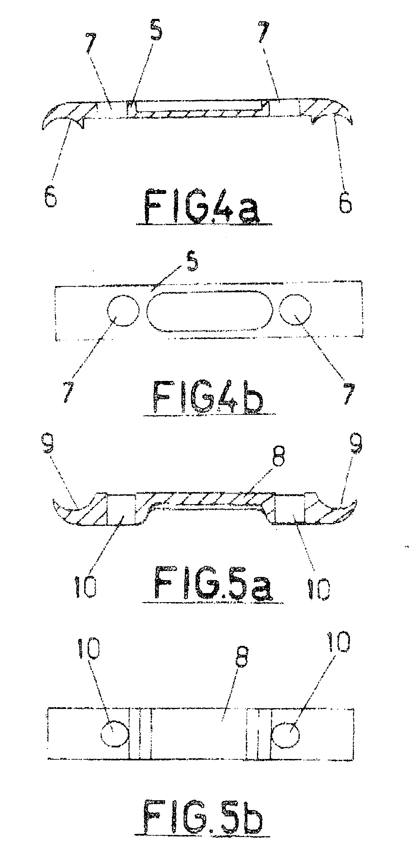

Quant aux Figures 4a et 4b on voit, respectivement, la représentation en élévation latérale d'une section longitudinale d'une bride et la projection en vue en plan supérieure de cette même bride. Cet élément de bride, qu'on peut utiliser pour le positionnement de la parti devant de la tige, constitue un élément d'union entre la selle du vélo et la tige quand les barres d'appui de la selle se situent dans le conduites 4 latérales de cette tige 1. La distance qui existe entre les conduites 6 est équivalente á la distance entre les conduites latérales 4 de la tige, tandis que la distance entre les trous 7 est équivalente à la que existe entre les deux trous 3 devant de la tige 1. De cette façon, quand on pose la selle sur la tige et ses barres latérales d'appui à l'intérieure de ces conduites 4, l'application de la bride 5 et le blocage a la tige avec des vis (pas représentés) qui passent à travers les trous 7 en forme de pas de vis à l'intérieur des trous 3 permettent la fixation définitive de la selle sur ce côté. On utilisera de préférence des vis type Allen, même si on pourra utiliser de n'importe quel type.

En plus, dans l'autre côté, on bloque la selle avec une autre bride, appelée bride arrière, représentée dans les Figures 5a et 5b où on représente les vues en section longitudinale et en plan supérieur de cet élément. La bride arrière est constituée d'un corps 8 généralement de forme allongée avec un plan rectangulaire, pourvu de conduites 9 liées aux extrémités et de trous 10 traversés réalisées à travers le corps 8 et séparées entre eux. A l'égal de la bride antérieure, la séparation entre les conduites 9 est équivalente à la que existe entre les conduites latérales 4 de la tige 1, tandis que la séparation entre les trous 10 est équivalente à la qui existe entre les trous 3 arrières de la tige. De cette façon, le blocage de la bride 8 à la tige se réalise avec des vis (pas représentés) qui passent à travers les trous 10 en forme de pas de vis à l'intérieur des trous 3 de la portion supérieure de la tige 1.

Suivant la forme de réalisation recommandée, les brides de fixation devant et arrière utilisées pour le blocage de la selle permettent le mouvement en direction longitudinale de la selle (avant, arrière) de façon rapide et simple pour obtenir le positionnement qui s'adapte le mieux aux exigences et préférences de l'usager.

L'usage d'une tige d'une seule pièce, comme par exemple le modèle proposé par l'invention, simplifie considérablement le fixage de la selle au vélo et offre majeure sécurité grâce à système de blocage. En plus, étant donné que chaque usager règle la position de la selle selon son goût, cette invention a prévu un conjoint de coins fabriqués avec un matériel élastique (gomme dure ou matériel semblable) que l'usager peut utiliser s'il le considère opportun et qui ne sont pas représentés puisqu'il s'agit de pièces communes. L'épaisseur de ces coins peut varier selon l'inclination de la selle et l'emboutissage des conduites 4 de la tige permet régler la position finale de la selle sans utiliser aucun élément strié ou éléments complémentaires conformément à la technique précédente. De cette façon on compense les différents angles des tubes verticaux inclinés de soutien de la selle du vélo, on évite le serrage mineur des vis et augmente la fonction anti-dérapant de la selle. En vertu de la réalisation préférée de l'invention, les épaisseurs des coins peuvent varier selon la séquence des valeurs de 0,5 à 1 mm, de 1 mm à 5 mm et de 1,5 à 2 mm qui représentent les mesures recommandées, même si la gamme de valeurs peut varier.

Donc, l'invention a été décrite conformément à une forme de réalisation préférée qui permet le fixage de la selle à la tige avec des brides et un numéro déterminé de vis. Evidemment ces circonstances peuvent varier puisque le numéro de vis peut être différent ou bien on peut utiliser un croisillon conventionnel pour fixer la selle, sans modifier les caractéristiques de l'invention.

En plus, pour offrir plusieurs solutions effectives aux différentes situations pratiques, la tige inventée incorpore un kit avec le jeu complet de coins de différentes épaisseurs pour que chaque usager puisse adapter la selle du vélo à l'inclination la plus adéquate selon ses besoins et préférences et aux inclinations du tube vertical de la structure du vélo qui fait de soutien à la selle.

On ne considère pas nécessaire développer excessivement le contenu de cette description puisque un expert en matière comprendra parfaitement la portée du même, les avantages de l'invention et comment développer et mettre en oeuvre l'objet de l'invention.

Cependant, on rappelle que l'invention a été décrite selon une réalisation préférée de la même et elle est donc susceptible de modification, sans altérer le fondement de cette invention ; ces modifications intéressent la forme, les dimensions et/ou les matériels de fabrication du conjoint ou de ses parties.

## Revendications

1. Tige de selle de vélo qui s'utilise comme pièce intermédiaire pour le soutien et le blocage de la selle a la structure d'un vélo, composée de :
Une tige (1) construite en une seule pièce de matériel léger et résistent où on distingue une partie (1a) inférieure généralement de forme tubulaire cylindrique, éventuellement en forme de pas de vis à l'intérieur et une partie (1b) supérieure qui adopte un forme de tronc de pyramide dont les dimensions augmentent en direction ascendante, avec une base supérieure inclinée pourvue d'un trou axial dont les dimensions augmentent aussi en direction ascendante pour permettre la formation de quatre pilier (2) internes en correspondance avec tous les coins et dans lesquels on a réalisé un trou (3) respective, montrant la formation de deux conduites (4) longitudinales sur chaque côté ;
Un élément (5) de bride devant configuré comme un corps longitudinal avec des conduites (6) aux extrémités et trous traversés (7) qui traversent le corps (5) de la bride, étant les conduites extrêmes (6) séparées par une distance équivalente à la distance qui existe entre les conduites (4) du corps de la tige (1) et les trous traversés (7) séparés par la distance qui sépare les trous (3) devant du corps de la tige (1) et
Un élément (8) de bride arrière configuré comme un corps longitudinal avec deux conduites (9) en correspondance avec les extrémités du corps (8) et deux trous traversés (10) en position predéterminée au long du corps, étant la distance qui existe entre les conduites (4) du corps de la tige (1) équivalente et les trous traversés (10) séparés par une distance qui équivaut à la séparation entre les trous arrières (3) du corps de la tige (1).

2. La tige, conforme au point 1, permet intercaler dans les conduites latérales (4) des coins de différentes épaisseurs construits en gomme dure ou matériel plastique dont le positionnement est susceptibles de modification.
